# EUROPEAN PATENT APPLICATION

(11) **EP 4 277 376 A1**
(43) Date of publication of application: **15.11.2023**
(21) Application number: 23171669.7
(22) Date of filing: 04.05.2023
(51) Int. Cl.: H04W 60/00, H04W 84/06

(54) **HANDLING OF REJECT CAUSES AND FORBIDDEN TAI LISTS IN REJECT MESSAGES IN MOBILE COMMUNICATIONS**

(30) Priority: 10.05.2022 US 202263339986 P; 22.02.2023 US 202318113011
(71) Applicant: MediaTek Singapore Pte. Ltd., Singapore 138628 (SG)
(72) Inventor: NIEMI, Marko, Oulu (FI); LIN, Yuan-Chieh, Hsinchu City (TW)
(74) Representative: Patentship Patentanwaltsgesellschaft mbH

(57) **Abstract**

Examples pertaining to handling of reject causes and forbidden tracking area identifier (TAI) lists in reject messages in mobile communications are described. A user equipment (UE) receives a reject message from a satellite-accessing cell of a network. The UE then stores one or more TAIs that are included in at least one information element (IE) of the reject message in a list of forbidden tracking areas in the UE regardless of a reject cause indicated in the reject message.

## Description

### TECHNICAL FIELD

The present disclosure is generally related to mobile communications and, more particularly, to handling of reject causes and forbidden tracking area identifier (TAI) lists in reject messages in mobile communications.

### BACKGROUND

Unless otherwise indicated herein, approaches described in this section are not prior art to the claims listed below and are not admitted as prior art by inclusion in this section.

In wireless communications, such as mobile communications under the 3^{rd} Generation Partnership Project (3GPP) standards including 5^{th} Generation (5G) New Radio (NR) and 4^{th} Generation (4G), satellite access is standardized for user equipment (UE) and Internet-of-Things (IoT) devices. A cell offering satellite access for UE and loT devices can indicate its support for multiple tracking area codes (TACs) for a give public land mobile network (PLMN). Moreover, a network may reject a procedure, such as an ATTACH procedure, a tracking area update (TAU) procedure, a SERVICE REQUEST procedure or a REGISTRATION procedure, by including one or multiple forbidden TAI (FTAI) lists and a reject cause in a reject message. For example, the multiple FTAI lists included in the reject message can include one FTAI list for TAIs rejected with cause #13 and cause #15 as well as another FTAI list for TAIs rejected with cause #12. In addition, the reject message may include a reject cause which can be one of cause #12, #13 and #15. At present time, it is not yet specified how a UE or IoT device should behave when it receives one or multiple FTAI lists in the reject message with a reject cause. Therefore, there is a need for a solution of handling of reject causes and FTAI lists in reject messages in mobile communications.

### SUMMARY

A first aspect of the invention relates to a method, comprising: receiving, by a processor of a user equipment (UE), a reject message from a satellite-accessing cell of a network; and storing, by the processor, one or more tracking area identifiers (TAIs) that are included in at least one information element (IE) of the reject message in a list of forbidden tracking areas in the UE regardless of a reject cause indicated in the reject message.

In a first embodiment of the first aspect, the reject message comprises an attach reject message, a tracking area update (TAU) reject message, a service reject message or a registration reject message. In a second embodiment of the first aspect, the reject message comprises at least one of one or more forbidden TAIs for a list of a "forbidden tracking areas for roaming" information element (IE), one or more forbidden TAIs for a list of a "5^{th} Generation System (5GS) forbidden tracking areas for roaming" IE, one or more forbidden TAIs for a list of a "forbidden tracking areas for regional provision of service" IE, or one or more forbidden TAIs for a list of a "5GS forbidden tracking areas for regional provision of service" IE. In a third embodiment of the first aspect, the network comprises an Evolved Packet System (EPS) network or a 5^{th} Generation System (5GS) network. In a fourth embodiment of the first aspect in combination with the third embodiment of the first aspect, the reject cause comprises an EPS Mobility Management (EMM) reject cause or a 5^{th} Generation Mobility Management (5GMM) reject cause. In a fifth embodiment of the first aspect in combination with the third embodiment of the first aspect, the list of forbidden tracking areas in the UE comprises a corresponding EPS or 5GS list of forbidden tracking areas for roaming or a corresponding EPS or 5GS list of forbidden tracking areas for regional provision of service. In a sixth embodiment of the first aspect, the one or more TAIs comprise one TAI or multiple different TAIs which are rejected with one or multiple reasons and wherein one of the one or multiple reject reasons or another reject cause value is included in the at least one IE of the reject message to indicate a reason for why the reject message is sent by the network. In a seventh embodiment of the first aspect, the method further comprises: executing, by the processor, one or more actions defined for a value of the reject cause indicated by an Evolved Packet System (EPS) Mobility Management (EMM) cause IE or a 5^{th} Generation Mobility Management (5GMM) cause IE in the reject message.

A second aspect of the invention relates to an apparatus implementable in a user equipment (UE), comprising: a transceiver configured to communicate wirelessly with a network; and a processor coupled to the transceiver and configured to perform operations comprising: receiving, via the transceiver, a reject message from a satellite-accessing cell of the network; and storing, by the processor, one or more tracking area identifiers (TAIs) that are included in at least one information element (IE) of the reject message in a list of forbidden tracking areas in the UE regardless of a reject cause indicated in the reject message.

In a first embodiment of the second aspect, the reject message comprises an attach reject message, a tracking area update (TAU) reject message, a service reject message or a registration reject message. In a second embodiment of the second aspect, the reject message comprises at least one of one or more forbidden TAIs for a list of a "forbidden tracking areas for roaming" information element (IE), one or more forbidden TAIs for a list of a "5^{th} Generation System (5GS) forbidden tracking areas for roaming" IE, one or more forbidden TAIs for a list of a "forbidden tracking areas for regional provision of service" IE, or one or more forbidden TAIs for a list of a "5GS forbidden tracking areas for regional provision of service" IE. In a third embodiment of the second aspect, the network comprises an Evolved Packet System (EPS) network or a 5^{th} Generation System (5GS) network. In a fourth embodiment of the second aspect in combination with the third embodiment of the second aspect, the reject cause comprises an EPS Mobility Management (EMM) reject cause or a 5^{th} Generation Mobility Management (5GMM) reject cause. In a fifth embodiment of the second aspect in combination with the third embodiment of the second aspect, the list of forbidden tracking areas in the UE comprises at least one of a corresponding EPS or 5GS list of forbidden tracking areas for roaming or a corresponding EPS or 5GS list of forbidden tracking areas for regional provision of service. In a sixth embodiment of the second aspect, the one or more TAIs comprise one TAI or multiple different TAIs which are rejected with one or multiple reasons, and wherein one of the one or multiple reasons or another cause value is included in the at least one IE of the reject message to indicate a reason for why the reject message is sent by the network. In a seventh embodiment of the second aspect, the processor is further configured to perform operations comprising: executing one or more actions defined for a value of the reject cause indicated by an Evolved Packet System (EPS) Mobility Management (EMM) cause IE or a 5^{th} Generation Mobility Management (5GMM) cause IE in the reject message.

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is propose schemes, concepts, designs, systems, methods and apparatus pertaining to handling of reject causes and FTAI lists in reject messages in mobile communications. It is believed that the above-described issue would be avoided or otherwise alleviated by implementing one or more of the proposed schemes described herein.

In one aspect, a method may involve a processor of an apparatus (e.g., UE) receiving a reject message from a satellite-accessing cell of a network. The method may further involve the processor storing one or more TAIs that are included in at least one information element (IE) of the reject message in a list of forbidden tracking areas in the UE regardless of a reject cause indicated in the reject message.

In another aspect, an apparatus may include a transceiver and a processor coupled to the transceiver. The transceiver may be configured to communicate wirelessly with a network. The processor may receive, via the transceiver, a reject message from a satellite-accessing cell of the network. The processor may also store one or more TAIs that are included in at least one IE of the reject message in a list of forbidden tracking areas in the UE regardless of a reject cause indicated in the reject message.

It is noteworthy that, although description provided herein may be in the context of certain radio access technologies, networks and network topologies such as 5^{th} Generation System (5GS) and 4G Evolved Packet System (EPS) mobile networking, the proposed concepts, schemes and any variation(s)/derivative(s) thereof may be implemented in, for and by other types of wireless and wired communication technologies, networks and network topologies such as, for example and without limitation, Ethernet, Universal Terrestrial Radio Access Network (UTRAN), Evolved UTRAN (E-UTRAN), Global System for Mobile communications (GSM), General Packet Radio Service (GPRS)/Enhanced Data rates for Global Evolution (EDGE) Radio Access Network (GERAN), Long-Term Evolution (LTE), LTE-Advanced, LTE-Advanced Pro, IoT, Industrial IoT (IIoT), Narrow Band Internet of Things (NB-IoT), and any future-developed networking technologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a block diagram of an example communication system in accordance with an implementation of the present disclosure.
FIG. 3 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to handling of reject causes and FTAI lists in reject messages in mobile communications. According to the present disclosure, a number of possible solutions may be implemented separately or jointly. That is, although these possible solutions may be described below separately, two or more of these possible solutions may be implemented in one combination or another.

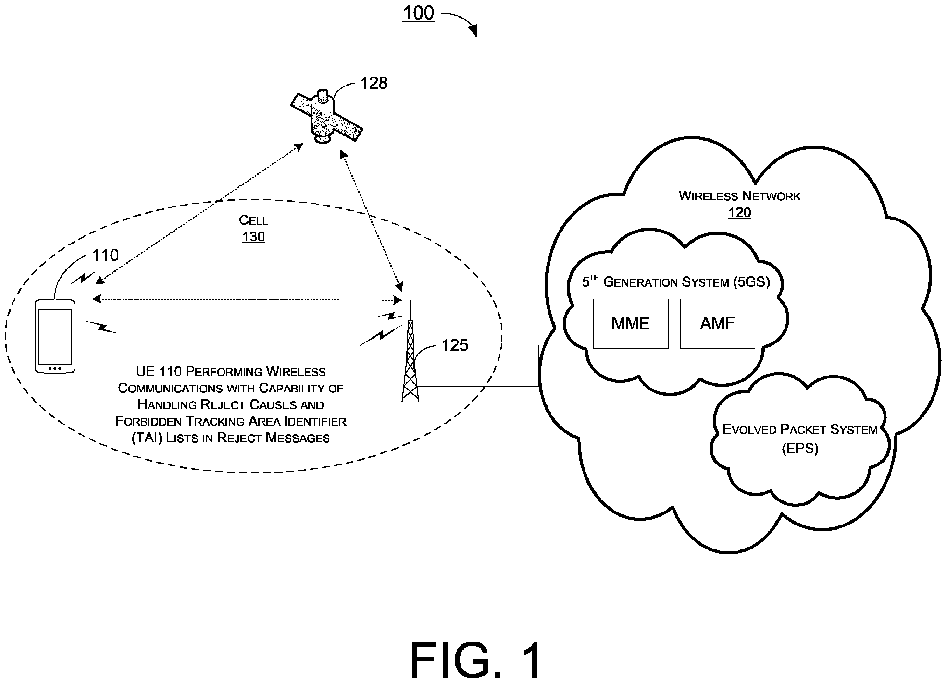

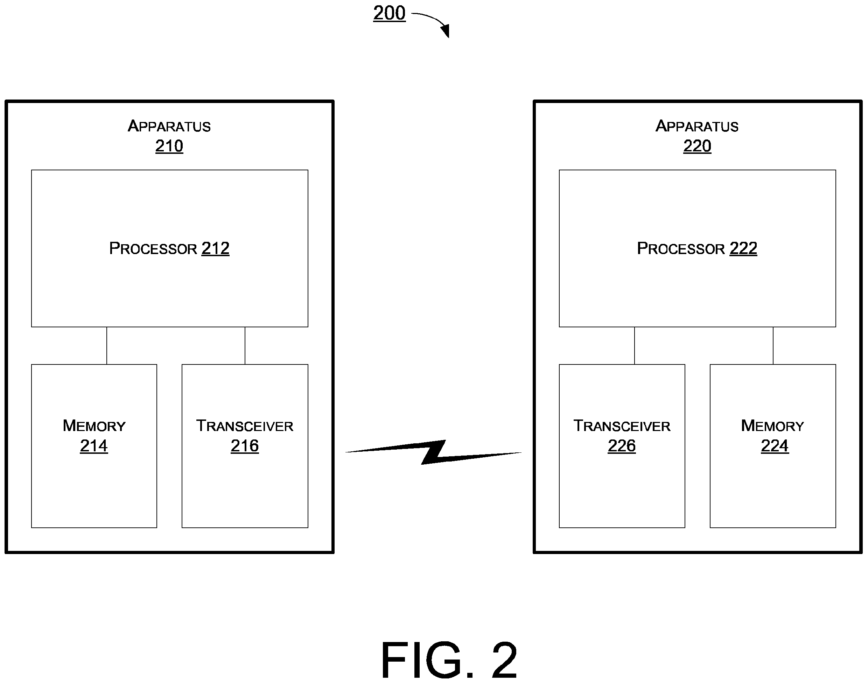

FIG. 1 illustrates an example network environment 100 in which various solutions and schemes in accordance with the present disclosure may be implemented. FIG. 2 ~ FIG. 3 illustrate examples of implementation of various proposed schemes in network environment 100 in accordance with the present disclosure. The following description of various proposed schemes is provided with reference to FIG. 1 ~ FIG. 3.

Referring to FIG. 1, network environment 100 may involve a UE 110 and a wireless network 120, which may include a 5^{th} Generation System (5GS) (and, optionally, an EPS). Depending on channel condition, availability and/or other factor(s), UE 110 may be in wireless communication with wireless network 120 via one or more terrestrial network nodes (e.g., base station(s) such as eNB, gNB and/or transmission/reception point (TRP)) and/or one or more non-terrestrial network nodes (e.g., satellite(s)). For simplicity in illustration and without limiting the scope of the present disclosure, UE 110 may be associated with or otherwise in communication with a cell 130 corresponding to a terrestrial network node 125 (e.g., gNB, eNB or TRP) and/or a non-terrestrial network node 128 (e.g., satellite) of wireless network 120. In network environment 100, UE 110 and wireless network 120 may implement various schemes pertaining to handling of reject causes and FTAI lists in reject messages in mobile communications in accordance with the present disclosure, as described below. It is noteworthy that, while the various proposed schemes may be individually or separately described below, in actual implementations each of the proposed schemes may be utilized individually or separately. Alternatively, some or all of the proposed schemes may be utilized jointly.

In situations in which there is only non-satellite access, one TAI is broadcast by cell 130 on which UE 110 is camped on. For instance, in case that an Evolved Mobility Management (EMM) procedure needs to be rejected by network 120, then an EMM REJECT message is sent to UE 110 with the EMM REJECT message containing an EMM cause value information element (IE) that includes the cause (e.g., cause #12), which means in UE 110 that UE 110 puts the broadcast TAI of the respective PLMN (cell) into a list of forbidden tracking areas for regional provision of service. In situations in which there is satellite access, the cell (e.g., cell 130) on which UE 110 is camped can broadcast multiple TAIs. In case that network 120 cannot accept a REQUEST on this cell/PLMN, then each of the TAIs can be rejected with different cause values (e.g., TAI #1 with cause #12, TAI #2 with cause #13, TAI #3 with cause #15, with TAI #1 being put into a list of forbidden tracking areas for regional provision of service and TAI #2 and #3 being stored into a list of forbidden tracking areas for roaming. As with in non-satellite access networks, in a satellite-accessing network, a REJECT message includes one EMM and/or 5^{th} Generation Mobility Management (5GMM) cause IE including one reject cause that indicates the reason for rejection.

Under a proposed scheme in accordance with the present disclosure, in case that UE 110 is operating in an EPS or 5GS network (e.g., network 120) and receives an IE (that includes a list of forbidden tracking areas for roaming) in an ATTACH REJECT message, a TAU REJECT message or a REGISTRATION REJECT message, UE 110 may store the TAI(s) included in the IE in a corresponding EPS or 5GS list of forbidden tracking areas for roaming in UE 110 (if not already stored) regardless of the reject cause received in the REJECT message. Correspondingly, under the proposed scheme, in case that UE 110 is operating in an EPS or 5GS network (e.g., network 120) and receives an IE (that includes a list of forbidden tracking areas for regional provision of service) in a REJECT message, UE 110 may store the TAI(s) included in the IE in a corresponding EPS or 5GS list of forbidden tracking areas for regional provision of service in UE 110 (if not already stored) regardless of the reject cause received in the REJECT message. Moreover, under the proposed scheme, regardless of whether none, one or two of these IEs of lists of forbidden tracking areas is/are included in a received REJECT message, UE 110 may take actions defined for the reject cause value that is included in the EMM/5GMM cause IE included in the received REJECT message.

Under a proposed scheme in accordance with the present disclosure, in case that a Mobility Management Entity (MME) (or an Access and Mobility Management Function (AMF)) of network 120 is to reject different TAIs with different cause values (e.g., TAI #1 with cause #12, TAI #2 with cause #13, and TAI #3 with cause #15), then the MME or the AMF may include in the EMM/5GMM cause value IE of a REJECT message a reject cause value which is one of the multiple cause values or, alternatively, another cause (e.g., cause #11 for "PLMN not allowed", cause #35 for "Requested service option not authorized in this PLMN", or a new cause # to indicate that the REJECT is sent by the network "for multiple reasons").

### Illustrative Implementations

FIG. 2 illustrates an example communication system 200 having at least an example apparatus 210 and an example apparatus 220 in accordance with an implementation of the present disclosure. Each of apparatus 210 and apparatus 220 may perform various functions to implement schemes, techniques, processes and methods described herein pertaining to handling of reject causes and FTAI lists in reject messages in mobile communications, including the various schemes described above with respect to various proposed designs, concepts, schemes, systems and methods described above, including network environment 100, as well as processes described below.

Each of apparatus 210 and apparatus 220 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 210 and apparatus 220 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 210 and apparatus 220 may also be a part of a machine type apparatus, which may be an IoT apparatus such as an immobile or a stationary apparatus, a home apparatus, a roadside unit (RSU), a wire communication apparatus or a computing apparatus. For instance, each of apparatus 210 and apparatus 220 may be implemented in a smart thermostat, a smart fridge, a smart door lock, a wireless speaker or a home control center. When implemented in or as a network apparatus, apparatus 210 and/or apparatus 220 may be implemented in an eNodeB in an LTE, LTE-Advanced or LTE-Advanced Pro network or in a gNB or TRP in a 5G network, an NR network or an IoT network.

In some implementations, each of apparatus 210 and apparatus 220 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 210 and apparatus 220 may be implemented in or as a network apparatus or a UE. Each of apparatus 210 and apparatus 220 may include at least some of those components shown in FIG. 2 such as a processor 212 and a processor 222, respectively, for example. Each of apparatus 210 and apparatus 220 may further include one or more other components not pertinent to the proposed scheme of the present disclosure (e.g., internal power supply, display device and/or user interface device), and, thus, such component(s) of apparatus 210 and apparatus 220 are neither shown in FIG. 2 nor described below in the interest of simplicity and brevity.

In one aspect, each of processor 212 and processor 222 may be implemented in the form of one or more single-core processors, one or more multi-core processors, or one or more CISC or RISC processors. That is, even though a singular term "a processor" is used herein to refer to processor 212 and processor 222, each of processor 212 and processor 222 may include multiple processors in some implementations and a single processor in other implementations in accordance with the present disclosure. In another aspect, each of processor 212 and processor 222 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 212 and processor 222 is a special-purpose machine specifically designed, arranged and configured to perform specific tasks including those pertaining to handling of reject causes and FTAI lists in reject messages in mobile communications in accordance with various implementations of the present disclosure.

In some implementations, apparatus 210 may also include a transceiver 216 coupled to processor 212. Transceiver 216 may be capable of wirelessly transmitting and receiving data. In some implementations, transceiver 216 may be capable of wirelessly communicating with different types of wireless networks of different radio access technologies (RATs). In some implementations, transceiver 216 may be equipped with a plurality of antenna ports (not shown) such as, for example, four antenna ports. That is, transceiver 216 may be equipped with multiple transmit antennas and multiple receive antennas for multiple-input multiple-output (MIMO) wireless communications. In some implementations, apparatus 220 may also include a transceiver 226 coupled to processor 222. Transceiver 226 may include a transceiver capable of wirelessly transmitting and receiving data. In some implementations, transceiver 226 may be capable of wirelessly communicating with different types of UEs/wireless networks of different RATs. In some implementations, transceiver 226 may be equipped with a plurality of antenna ports (not shown) such as, for example, four antenna ports. That is, transceiver 226 may be equipped with multiple transmit antennas and multiple receive antennas for MIMO wireless communications.

In some implementations, apparatus 210 may further include a memory 214 coupled to processor 212 and capable of being accessed by processor 212 and storing data therein. In some implementations, apparatus 220 may further include a memory 224 coupled to processor 222 and capable of being accessed by processor 222 and storing data therein. Each of memory 214 and memory 224 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 214 and memory 224 may include a type of read-only memory (ROM) such as mask ROM, programmable ROM (PROM), erasable programmable ROM (EPROM) and/or electrically erasable programmable ROM (EEPROM). Alternatively, or additionally, each of memory 214 and memory 224 may include a type of non-volatile random-access memory (NVRAM) such as flash memory, solid-state memory, ferroelectric RAM (FeRAM), magnetoresistive RAM (MRAM) and/or phase-change memory. Alternatively, or additionally, each of memory 214 and memory 224 may include a UICC.

Each of apparatus 210 and apparatus 220 may be a communication entity capable of communicating with each other using various proposed schemes in accordance with the present disclosure. For illustrative purposes and without limitation, a description of capabilities of apparatus 210, as a UE (e.g., UE 110), and apparatus 220, as a network node (e.g., terrestrial network node 125 or non-terrestrial network node 128) of a wireless network (e.g., wireless network 120), is provided below.

Under certain proposed schemes in accordance with the present disclosure with respect to handling of reject causes and FTAI lists in reject messages in mobile communications, processor 212 of apparatus 210, implemented in or as UE 110, may receive, via transceiver 216, a reject message from a satellite-accessing cell of a network (e.g., via apparatus 220). Additionally, processor 212 may store, in memory 214, one or more TAIs that are included in at least one IE of the reject message in a list of forbidden tracking areas in the UE regardless of a reject cause indicated in the reject message.

In some implementations, the reject message may include an attach reject message, a TAU reject message, a service reject message or a registration reject message.

Alternatively, or additionally, the reject message may include at least one of the following: (i) one or more forbidden TAIs for the list of "forbidden tracking areas for roaming" IE, (ii) one or more forbidden TAIs for the list of "5GS forbidden tracking areas for roaming" IE, (iii) one or more forbidden TAIs for the list of "forbidden tracking areas for regional provision of service" IE, and (iv) one or more forbidden TAIs for the list of "5GS forbidden tracking areas for regional provision of service" IE.

In some implementations, the network may include an EPS network and/or a 5GS network. In such cases, the reject cause may include an EMM reject cause or a 5GMM reject cause. Moreover, the list of forbidden tracking areas in the UE may include a corresponding EPS or 5GS list of forbidden tracking areas for roaming or a corresponding EPS or 5GS list of forbidden tracking areas for regional provision of service.

In some implementations, the one or more TAIs may include one TAI or multiple different TAIs which are rejected with one or multiple reject reasons. Furthermore, one of the one or multiple reject reasons or another reject cause value may be included in the at least one IE of the reject message to indicate a reason for why the reject message is sent by the network.

In some implementations, process 300 may further involve processor 212 executing one or more actions defined for a value of the reject cause indicated by an EMM cause IE or a 5GMM cause IE in the reject message.

### Illustrative Processes

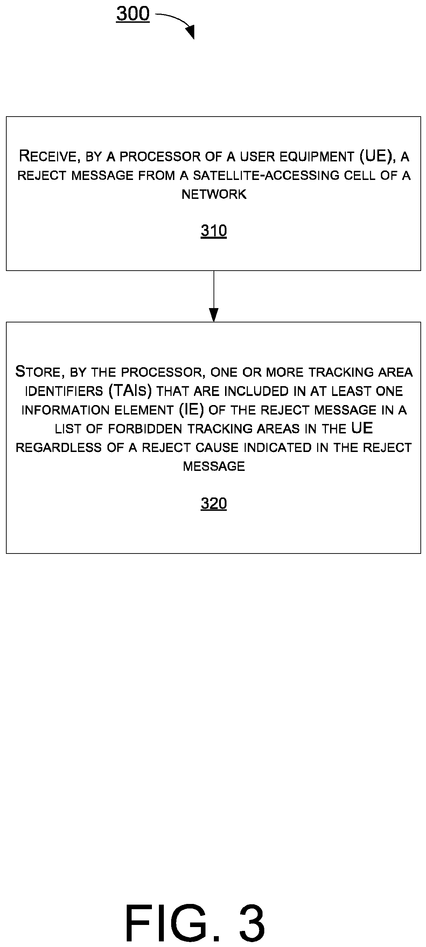

FIG. 3 illustrates an example process 300 in accordance with an implementation of the present disclosure. Process 300 may represent an aspect of implementing various proposed designs, concepts, schemes, systems and methods described above, whether partially or entirely, including those described above. More specifically, process 300 may represent an aspect of the proposed concepts and schemes pertaining to handling of reject causes and FTAI lists in reject messages in mobile communications. Process 300 may include one or more operations, actions, or functions as illustrated by one or more of blocks 310 and 320. Although illustrated as discrete blocks, various blocks of process 300 may be divided into additional blocks, combined into fewer blocks, or eliminated, depending on the desired implementation. Moreover, the blocks/sub-blocks of process 300 may be executed in the order shown in FIG. 3 or, alternatively in a different order. Furthermore, one or more of the blocks/sub-blocks of process 300 may be executed iteratively. Process 300 may be implemented by or in apparatus 210 and apparatus 220 as well as any variations thereof. Solely for illustrative purposes and without limiting the scope, process 300 is described below in the context of apparatus 210 as a UE (e.g., UE 110) and apparatus 220 as a communication entity such as a network node or base station (e.g., terrestrial network node 125 or non-terrestrial network node 128) of a network (e.g., wireless network 120). Process 300 may begin at block 310.

At 310, process 300 may involve processor 212 of apparatus 210, implemented in or as UE 110, receiving, via transceiver 216, a reject message from a satellite-accessing cell of a network (e.g., via apparatus 220). Process 300 may proceed from 310 to 320.

At 320, process 300 may involve processor 212 storing, in memory 214, one or more TAIs that are included in at least one IE of the reject message in a list of forbidden tracking areas in the UE regardless of a reject cause indicated in the reject message.

In some implementations, the reject message may include an attach reject message, a TAU reject message, a service reject message or a registration reject message.

Alternatively, or additionally, the reject message may include at least one of the following: (i) one or more forbidden TAIs for the list of "forbidden tracking areas for roaming" IE, (ii) one or more forbidden TAIs for the list of "5GS forbidden tracking areas for roaming" IE, (iii) one or more forbidden TAIs for the list of "forbidden tracking areas for regional provision of service" IE, and (iv) one or more forbidden TAIs for the list of "5GS forbidden tracking areas for regional provision of service" IE.

In some implementations, the network may include an EPS network and/or a 5GS network. In such cases, the reject cause may include an EMM reject cause or a 5GMM reject cause. Moreover, the list of forbidden tracking areas in the UE may include a corresponding EPS or 5GS list of forbidden tracking areas for roaming or a corresponding EPS or 5GS list of forbidden tracking areas for regional provision of service.

In some implementations, the one or more TAIs may include one TAI or multiple different TAIs which are rejected with one or multiple reject reasons. Furthermore, one of the one or multiple reject reasons or another reject cause value may be included in the at least one IE of the reject message to indicate a reason for why the reject message is sent by the network.

In some implementations, process 300 may further involve processor 212 executing one or more actions defined for a value of the reject cause indicated by an EMM cause IE or a 5GMM cause IE in the reject message.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (300), comprising:
receiving (310), by a processor (212) of a user equipment (110, 210), UE, a reject message from a satellite-accessing cell of a network (120); and
storing (320), by the processor (212), one or more tracking area identifiers, TAIs, that are included in at least one information element, IE, of the reject message in a list of forbidden tracking areas in the UE (110, 210) regardless of a reject cause indicated in the reject message.

2. The method (300) of Claim 1, wherein the reject message comprises an attach reject message, a tracking area update, TAU, reject message, a service reject message or a registration reject message.

3. The method (300) of Claim 1, wherein the reject message comprises at least one of one or more forbidden TAIs for a list of a "forbidden tracking areas for roaming" information element, IE, one or more forbidden TAIs for a list of a "5^{th} Generation System, 5GS, forbidden tracking areas for roaming" IE, one or more forbidden TAIs for a list of a "forbidden tracking areas for regional provision of service" IE, or one or more forbidden TAIs for a list of a "5GS forbidden tracking areas for regional provision of service" IE.

4. The method (300) of Claim 1, wherein the network (120) comprises an Evolved Packet System, EPS, network or a 5^{th} Generation System, 5GS, network.

5. The method (300) of Claim 4, wherein the reject cause comprises an EPS Mobility Management, EMM, reject cause or a 5^{th} Generation Mobility Management, 5GMM, reject cause.

6. The method (300) of Claim 4, wherein the list of forbidden tracking areas in the UE (110, 210) comprises a corresponding EPS or 5GS list of forbidden tracking areas for roaming or a corresponding EPS or 5GS list of forbidden tracking areas for regional provision of service.

7. The method (300) of Claim 1, wherein the one or more TAIs comprise one TAI or multiple different TAIs which are rejected with one or multiple reasons and wherein one of the one or multiple reject reasons or another reject cause value is included in the at least one IE of the reject message to indicate a reason for why the reject message is sent by the network (120).

8. The method (300) of Claim 1, further comprising: executing, by the processor (212), one or more actions defined for a value of the reject cause indicated by an Evolved Packet System, EPS Mobility Management, EMM, cause IE or a 5^{th} Generation Mobility Management, 5GMM, cause IE in the reject message.

9. An apparatus (110, 210) implementable in a user equipment (110, 210), UE, comprising:
a transceiver (216) configured to communicate wirelessly with a network (120); and
a processor (212) coupled to the transceiver (216) and configured to perform operations comprising:
receiving, via the transceiver (216), a reject message from a satellite-accessing cell of the network (120); and
storing, by the processor (212), one or more tracking area identifiers, TAIs, that are included in at least one information element, IE, of the reject message in a list of forbidden tracking areas in the UE (110, 210) regardless of a reject cause indicated in the reject message.

10. The apparatus (110, 210) of Claim 9, wherein the reject message comprises an attach reject message, a tracking area update, TAU, reject message, a service reject message or a registration reject message.

11. The apparatus (110, 210) of Claim 9, wherein the reject message comprises at least one of one or more forbidden TAIs for a list of a "forbidden tracking areas for roaming" information element, IE, one or more forbidden TAIs for a list of a "5^{th} Generation System, 5GS, forbidden tracking areas for roaming" IE, one or more forbidden TAIs for a list of a "forbidden tracking areas for regional provision of service" IE, or one or more forbidden TAIs for a list of a "5GS forbidden tracking areas for regional provision of service" IE.

12. The apparatus (110, 210) of Claim 9, wherein the network (120) comprises an Evolved Packet System, EPS, network or a 5^{th} Generation System, 5GS, network.

13. The apparatus (110, 210) of Claim 12, wherein the reject cause comprises an EPS Mobility Management, EMM, reject cause or a 5^{th} Generation Mobility Management (5GMM) reject cause.

14. The apparatus (110, 210) of Claim 12, wherein the list of forbidden tracking areas in the UE (110, 210) comprises at least one of a corresponding EPS or 5GS list of forbidden tracking areas for roaming or a corresponding EPS or 5GS list of forbidden tracking areas for regional provision of service.

15. The apparatus (110, 210) of Claim 9, wherein the one or more TAIs comprise one TAI or multiple different TAIs which are rejected with one or multiple reasons, and wherein one of the one or multiple reasons or another cause value is included in the at least one IE of the reject message to indicate a reason for why the reject message is sent by the network (120).

16. The apparatus (110, 210) of Claim 9, wherein the processor (212) is further configured to perform operations comprising:
executing one or more actions defined for a value of the reject cause indicated by an Evolved Packet System, EPS, Mobility Management, EMM, cause IE or a 5^{th} Generation Mobility Management, 5GMM, cause IE in the reject message.
